# EUROPEAN PATENT SPECIFICATION

(11) **EP 4 311 756 B1**
(45) Date of publication and mention of the grant of the patent: **15.01.2025**
(21) Application number: 23187284.7
(22) Date of filing: 24.07.2023
(51) Int. Cl.: B62K 27/00, B62K 27/12

(54) **MOTORIZED TROLLEY, IN PARTICULAR FOR BICYCLES**
MOTORISIERTER WAGEN, INSBESONDERE FÜR FAHRRÄDER
CHARIOT MOTORISÉ, EN PARTICULIER POUR BICYCLETTES

(30) Priority: 29.07.2022 IT 202200016035
(43) Date of publication of application: 31.01.2024
(73) Proprietor: GF S.r.l., 12040 Piobesi d'Alba (IT)
(72) Inventor: ASTEGGIANO, MATTEO, 12060 POCAPAGLIA (IT)
(74) Representative: Garavelli, Paolo

(56) References cited:
- WO-A1-2021/150160
- DE-A1- 102014 009 746

## Description

The present invention refers to a motorized trolley, in particular, but not exclusively, for bicycles.

In the field of cycle tourism, a cyclist has the following needs:
- be able to travel medium-long distances easily and without competitive or competitive goals
- be able to bring the necessary luggage with him: camping tent, sleeping bag, bike repair tools and more, spare parts, spare clothing such as cycling and civilian clothing, towels, personal effects, food, food supplements, drinks (a water requirement can also be several litres, depending on the type of route), telephone, power bank, medicines and first aid, money and documents, maps, torches, etc.

To meet these needs, the following solutions are currently known and commercially available:
- luggage is loaded onto the bicycle using three rear bags and two front bags, as well as various panniers, fixed to the handlebar or frame. Fixing the luggage requires the application of special luggage rack structures to the bicycle, which is not easy to apply to all bicycles. If not securely fixed, luggage can affect the handling and balance of the bicycle. In all cases they weigh it down considerably;
- alternatively, the luggage can be tied to the bicycle with Velcro straps. It's a bit like the new trend, but it considerably limits the amount of luggage that can be carried and the practicality of fastening, which requires time and above all the removal of individual things which requires undoing and redoing the bindings;
- another solution is to load the luggage on a one- or two-wheeled cart to be towed with the bicycle. This solution eliminates the need to mount pannier racks on the bike, but still creates a non-negligible additional resistance to forward motion due to the weight of the trolley, the weight of the luggage, the rolling resistance of the additional wheels.

Some currently known implementations for the latter solution provide trolleys able to push the bicycle to increase its speed, but not to ensure effortless transport of the material contained in the same trolley. Other solutions envisage the use of the trolley exclusively with bicycles of the e-bike type, or the regulation of the thrust force via a handlebar.

However, these solutions are not yet entirely satisfactory. Document WO2021/150160A1 shows the preamble of claim 1.

Object of the present invention is solving the aforesaid prior art problems by providing a motorized trolley which can carry the luggage of a cycle tourist without requiring any towing effort, either on the plain, uphill or downhill. The cycle tourist pedals as if he didn't have to carry any luggage with him and without any disturbance to the handling of the bicycle.

The above and other objects and advantages of the invention, as will appear from the following description, are achieved with a motorized trolley such as the one described in claim 1. Preferred embodiments and non-trivial variations of the present invention form the subject matter of the dependent claims.

It is understood that all attached claims form an integral part of the present description.

The present invention will be better described by some preferred embodiments thereof, provided by way of non-limiting example, with reference to the attached drawings, in which:

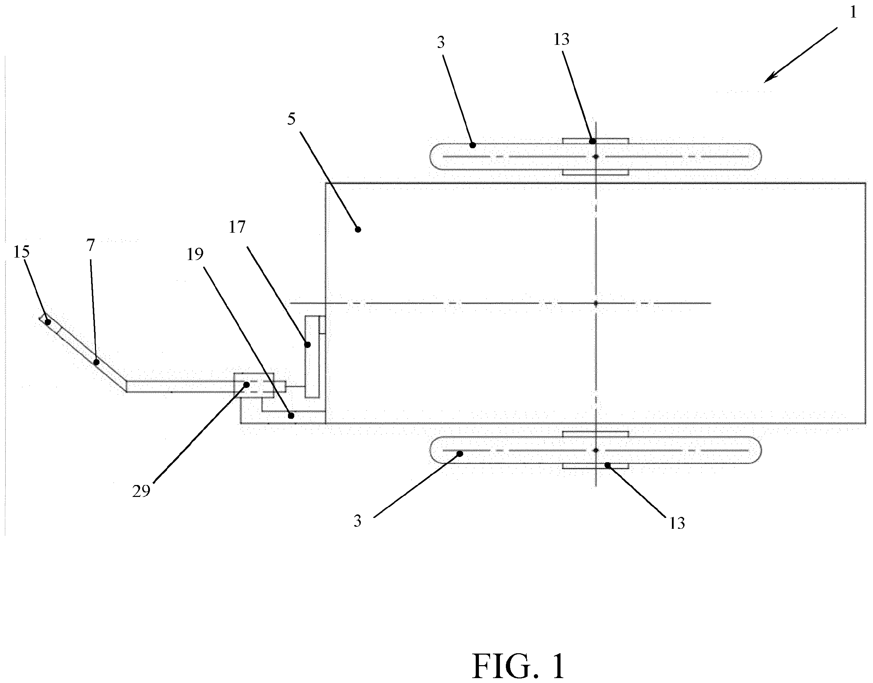

- Figure 1 is a schematic top view of an embodiment of the trolley according to the present invention; and

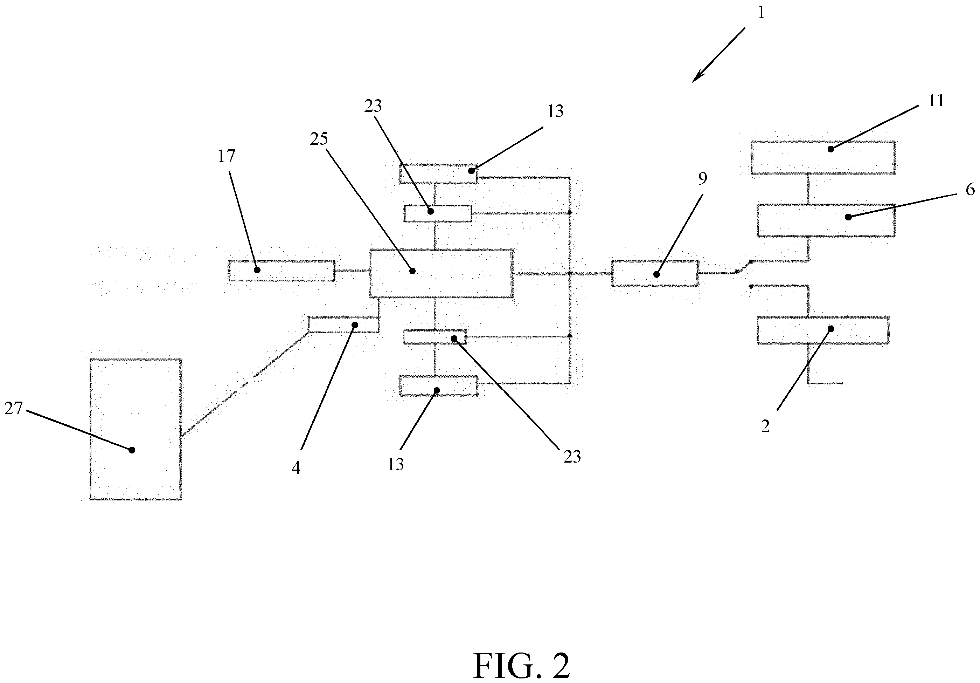

- Figure 2 is a block diagram of the main operating components of the trolley of the present invention.

Referring to the Figures, a preferred embodiment of the present invention is illustrated and described. It will be immediately obvious that innumerable variations and modifications (for example relating to shape, dimensions, various colours and parts with equivalent functionality) can be made to what is described, without departing from the scope of the invention as appears from the attached claims.

With reference to the Figures, the motorized trolley 1 of the present invention, in a practical embodiment thereof, has the following specific features.

The trolley 1 has two wheels 3 and a supporting structure 5 which is strong and rigid enough to place a suitcase or better a removable trolley and is equipped with a rudder 7 to connect it to the bicycle.

The trolley 1 is necessarily of the "active" type. Inside it contains an energy storage 9 (a rechargeable battery) which can be charged in advance with a suitable battery charger 2 and which can be kept charged during the journey by means of a solar panel 11 located on the upper part of the trolley 1. The wheels 3 are motorized with brushless motors 13 (or possibly of another type) preferably integrated in the wheels 3 so as to confer simplicity and structural compactness.

The rudder 7 is coupled to the bicycle at the rear axle with a constraint 15 similar to the one commonly used for all trolleys (transport of goods or children) which allows all degrees of freedom for the necessary relative movements between bike and trolley 1.

The rudder 7 obviously has a shape that allows the necessary steering angles to be obtained without interfering with the rear wheel of the bike.

The connection between the load-bearing structure 5 and the rudder 7 takes place via a prismatic coupling 19 which reacts against all transverse forces with respect to the direction of travel, and all moments, leaving only the force component parallel to the direction of travel is unloaded on a load cell 17 which measures its size. A dedicated electronic card 25 reads the latter and transmits the necessary information to the control drivers 23 of the motors 13 with the aim of always bringing the driving force back to zero.

In this way, the cyclist does not feel the presence of the trolley 1.

As in all control systems, it is necessary to find the right compromises between promptness and stability of response. Experimental results demonstrate that an excellent stability can be achieved without penalizing too much the readiness. A minimum of inertia can be perceived in the face of sudden acceleration but this sensation smooths out in a short and non-penalizing time, of the order of a second.

The best driving sensations at almost stationary speed are obtained due to the integrative strategy of the control card 25.

There is an opportunity to transmit some useful information to the cyclist, such as the state of charge of the battery 9, any residual force between the bike and the trolley 1, the intensity of the torque applied by the system on the wheels 3 of the trolley 1, etc. Initially, all of this was displayed on a display positioned on the handlebar, but an App 27 was created to avoid electrical connections between the bike and the trailer. It is installed on the mobile phone and can be connected to a board 25, and interact with it, via Bluetooth 4 and which provides all this information.

The same App 27 also allows implementing three modes of operation:
- ghost: total neutrality. As if the trolley 1 was not there
- eco: a small residual towing force remains which allows saving on the battery 9 and increasing the range
- help: the trolley 1 generates a minimum thrust on the bike which can help if one has a lot of residual charge and is particularly tired.

The latter property should not be understood as an alternative to the electric bicycle or a way to travel the road effortlessly. This would distort the basic concept of the project and require a much larger and heavier battery 9. However, it can be recalled for short periods in which the cyclist finds himself in difficulty.

The constant pursuit of traction force neutrality also brings its benefits when going downhill and when braking, as the trolley 1 does not "push" on the bike, risking compromising its stability, especially when cornering and on terrains with poor grip.

The energy balance between panel 11, battery 9 and users can be easily satisfied on sunny days. Generally speaking, it is considered that the panel 11 can recharge the battery 9 from zero to a maximum in 3-5 hours of full sun, and in any case in real time during a quiet ride, typical of the cycling tourist, during the day. It should be considered that, during the journey, the cycling tourist makes stops to rest, eat and drink, so the hours of sunshine can be much greater than those of actual walking, especially in summer.

If desired, the trolley 1 can be equipped with a battery 9 of greater capacity, such as to ensure assistance even on cloudy days, on highly mountainous routes, etc.: in this case it is assumed that the battery 9 can be recharged in the evening with a networked charger 2.

In the worst-case scenario, if the charge of battery 9 were to be completely lost, the trolley 1 could be assimilated to a traditional passive trolley, only a little heavier, but still towable.

Some specificities of the trolley 1 of the present invention are as follows.

To further clarify some details, it should be remembered that the only data needed for the correct operation of the trolley 1 control is the force exchanged with the bike. Speed, gradient, load, etc. are not influential and there is no need to measure them. This makes the implementation of the acquisition system particularly feasible.

To correctly measure the towing force, understood therefore as the force exchanged between the bike and the trolley 1 in the direction of travel, one can make use of a recirculating ball pad 29 which reacts to all forces and to all moments with the exception of the direction itself of the guide of the pad 29, thus allowing the useful force to be discharged onto a load cell 17 which measures its magnitude. The advantage of a recirculating ball pad 29 obviously lies in its compactness and reliability and in the minimum friction which has little effect on the value of the force to be measured.

The load cell 17 must be sized so as to be sensitive enough to the forces involved (in the order of tens of N), but equally robust so as not to be damaged in the event of impacts and other improper situations.

In the applicant's studies and prototype, a cell 17 was used which has a full scale of +- 300N, but resists without damage up to 1000N.

The motors 13, in the case of the prototype brushless, are positioned inside the wheels 3 and must be controlled by suitable drivers 23 capable of providing torque control.

Torque control is one of the fundamental points of the project, as it is the only way to be able to control the force on the ground and therefore neutralize the towing force, regardless of speed and any other parameter. Torque control must be effective in the various quadrants, so as to also guarantee braking, namely apply a torque opposite to the direction of rotation.

Few drivers 23 manage to effectively meet this requirement.

Obviously, the drivers 23, in order to generate the torque control, must receive a signal from a dedicated electronic card 25. Generally, it is a 0-5V analogue signal, but not necessarily.

The dedicated electronic board 25 reads the value of the force measured by the load cell 17, knows the zero-calibration value (trolley 1 detached from the bike) and integrates the differences between the measured value and the zero value over time. This integration is preceded by a moving average acquisition of the data to filter out any erroneous data and is the method that guarantees the greatest stability of the control. Indeed, when the differences between the measured force and zero become very small, the integral stabilizes and the torque control finds its optimal condition.

In reality, the software also has to deal with particular situations in order not to fall into error. The most critical is that in which the cyclist travels up a very steep slope. In this case, its speed varies greatly with every half turn of the pedals (for example from 4 to 6 km/h) and the inertia of the trolley 1 could, in the slowdown phases, simulate a push towards the bike, such as to induce the collapse system. Woe if this happens, just on a steep climb. For this reason, the passage to the braking condition must be subjected to particular filters so as not to be activated inappropriately.

Concretely, braking is activated for thrusts exceeding a certain value (in any case such as not to destabilize the cyclist) and after a minimum time delay (in the order of half a second).

The trolley 1 of the present invention has been previously described in the field of cycling tourism: it is obvious that the same solution can be easily adapted and extended to other applications.

The fact of driving a vehicle without having to apply effort could prove useful in many other applications, such as, for example, pushing a children's stroller or a shopping trolley on rough roads.

Furthermore, the solution described and illustrated here provides a trolley 1 equipped with two wheels 3, two motors 13, two drivers 23, a control board, a load cell 17 and the rudder 7 made in a certain way.

The possibility of realizing a single-wheel trolley 1 which works on exactly the same principle is not claimed.

It would have a wheel 3, a motor 13, a driver 23, a control board 25, a load cell 17, a rudder 7 obviously made in a different way from the previous one, having to be bilaterally constrained to the bike so as to ensure the balance of the trolley 1 itself. The criteria for discharging only the useful force onto the load cell 17 would be absolutely the same.

Finally, nowadays there are various types of bicycles on the market, for example MTB, gravel, racing bikes, e-bikes. The trolley 1 of the present invention can be connected to all of them.

A passive trolley 1 could have been connected to an MTB, an e-bike and, at most, a gravel bike, but never to a racing bike that destabilizes easily, especially when braking.

This trolley 1, on the other hand, can be connected to all types of bikes.

Some preferred embodiments of the present invention have been illustrated and described above: obviously, numerous variations and modifications, functionally equivalent to the previous ones, will be immediately apparent to those skilled in the art (such as for example a single-wheeled trolley or other types of transported means, also not from bicycles), which fall within the scope of the invention as defined in the attached claims.

## Claims

1. Motorized trolley (1), especially designed for use with bicycles, comprising:
- at least one supporting structure (5) operatively connected to at least one rudder (7) by at least one prismatic coupling (19), said rudder (7) being operatively connected to at least one bicycle by means of at least one constraint (15);
- at least two wheels (3) operatively connected to said supporting structure (5);
- at least two motors (13) operatively connected to said at least two wheels (3);
- at least one control card (25) designed to operatively cooperate with said at least two motors (13);
- at least one load cell (17) designed to operatively cooperate with said prismatic coupling (19);
- at least two control drivers (23) designed to operatively cooperate with said control card (25) and/or with said at least two motors (13);
- at least one battery (9) designed to operatively cooperate with said trolley (1),
**characterized in that** it comprises at least one recirculating ball pad (29) designed to operatively cooperate with said load cell (17), said pad (29) also being designed to react to all forces and moments excluding the force in the direction of travel.

2. Motorized trolley (1) according to claim 1, **characterized in that** it comprises at least one solar panel (11) operatively connected to said trolley (1), said solar panel (11) being designed to operatively cooperate with said battery (9).

3. Motorized trolley (1) according to claim 1, **characterized in that** it operatively cooperates with at least one App (27) designed to transmit to a cyclist the state of charge of the battery (9) or any residual force between bike and trolley (1) or the intensity of the torque implemented by the system on the wheels (3) of the trolley (1), said App (27) being also designed to operatively cooperate with said control board (25) via Bluetooth (4).

4. Motorized trolley (1) according to any one of the preceding claims, **characterized in that** said at least two motors (13) are positioned inside said at least two wheels (3), said two motors (13) being also designed to be controlled by said at least two drivers (23) being capable of providing torque control.

5. Motorized trolley (1) according to claim 1, **characterized in that** said battery (9) is recharged by means of a battery charger (2).

## Patentansprüche

1. Motorisierter Trolley (1), insbesondere für den Einsatz mit Fahrrädern, bestehend aus:
- mindestens eine tragende Struktur (5), die über mindestens eine Prismenkupplung (19) mit mindestens einem Ruder (7) wirkverbunden ist, wobei das Ruder (7) über mindestens ein Fahrrad mit mindestens einem Fahrrad wirkverbunden ist mindestens eine Einschränkung (15);
- mindestens zwei Räder (3), die betriebsmäßig mit der Tragstruktur (5) verbunden sind;
- mindestens zwei Motoren (13), die betriebsmäßig mit den mindestens zwei Rädern (3) verbunden sind;
- mindestens eine Steuerplatine (25), die für die betriebsmäßige Zusammenarbeit mit den mindestens zwei Motoren (13) ausgelegt ist;
- mindestens eine Wägezelle (17), die so gestaltet ist, dass sie betriebsmäßig mit der prismatischen Kupplung (19) zusammenwirkt;
- mindestens zwei Steuertreiber (23), die dazu ausgelegt sind, operativ mit der Steuerplatine (25) und/oder mit den mindestens zwei Motoren (13) zusammenzuarbeiten;
- mindestens eine Batterie (9), die dazu bestimmt ist, betriebsmäßig mit dem Wagen (1) zusammenzuarbeiten,
**gekennzeichnet durch** die Tatsache, dass es mindestens einen Kugelumlaufschlitten (29) umfasst, der so gestaltet ist, dass er betriebsmäßig mit der Kraftmessdose (17) zusammenwirkt, wobei der Schlitten (29) außerdem so ausgelegt ist, dass er auf alle Kräfte und alle Momente reagiert, mit Ausnahme der Kraft in Richtung reisen.

2. Motorisierter Wagen (1) nach Anspruch 1, **dadurch gekennzeichnet, dass** er mindestens ein Solarpaneel (11) umfasst, das betriebsmäßig mit dem Wagen (1) verbunden ist, wobei das Solarpaneel (11) so ausgelegt ist, dass es betriebsmäßig mit der Batterie (9) zusammenwirkt.

3. Motorisierter Trolley (1) nach Anspruch 1, **gekennzeichnet durch** die Tatsache, dass er operativ mit mindestens einer App (27) zusammenwirkt, die dazu bestimmt ist, einem Radfahrer den Ladezustand der Batterie (9) oder eine etwaige Restkraft zwischen dem Fahrrad zu übermitteln und Trolley (1) oder die Intensität des Drehmoments, das das System auf die Räder (3) des Trolleys (1) ausübt, wobei die App (27) auch dazu ausgelegt ist, über Bluetooth (4) mit der Steuerplatine (25) operativ zusammenzuarbeiten.

4. Motorisierter Wagen (1) nach einem der vorhergehenden Ansprüche, **dadurch gekennzeichnet, dass** die mindestens zwei Motoren (13) innerhalb der mindestens zwei Räder (3) positioniert sind, wobei die beiden Motoren (13) auch dafür ausgelegt sind dadurch gesteuert werden, dass die mindestens zwei Treiber (23) in der Lage sind, eine Drehmomentsteuerung bereitzustellen.

5. Motorisierter Trolley (1) nach Anspruch 1, **dadurch gekennzeichnet, dass** die Batterie (9) mittels eines Batterieladegeräts (2) aufgeladen wird.

## Revendications

1. Chariot motorisé (1), spécialement conçu pour être utilisé avec des bicyclettes, comprenant:
- au moins une structure porteuse (5) reliée fonctionnellement à au moins un gouvernail (7) au moyen d'au moins un accouplement prismatique (19), ledit gouvernail (7) étant relié fonctionnellement à au moins une bicyclette au moyen d'au au moins une contrainte (15);
- au moins deux roues (3) reliées fonctionnellement à ladite structure de support (5);
- au moins deux moteurs (13) connectés fonctionnellement auxdites au moins deux roues (3);
- au moins une carte de commande (25) conçue pour coopérer opérationnellement avec lesdits au moins deux moteurs (13);
- au moins une cellule de pesée (17) conçue pour coopérer opérationnellement avec ledit couplage prismatique (19);
- au moins deux pilotes de commande (23) conçus pour coopérer opérationnellement avec ladite carte de commande (25) et/ou avec lesdits au moins deux moteurs (13);
- au moins une batterie (9) conçue pour coopérer opérationnellement avec ledit chariot (1),
**caractérisé par** le fait de comporter au moins un coulisseau à recirculation de billes (29) conçu pour coopérer opérationnellement avec ledit capteur de pesée (17), ledit coulisseau (29) étant en outre conçu pour réagir à toutes forces et à tous moments à l'exclusion de la force dans le sens de voyage.

2. Chariot motorisé (1) selon la revendication 1, **caractérisé en ce qu'**il comprend au moins un panneau solaire (11) relié fonctionnellement audit chariot (1), ledit panneau solaire (11) étant conçu pour coopérer opérationnellement avec ladite batterie (9).

3. Chariot motorisé (1) selon la revendication 1, **caractérisé par** le fait de coopérer opérationnellement avec au moins une App (27) conçue pour transmettre à un cycliste l'état de charge de la batterie (9) ou toute force résiduelle entre le vélo et chariot (1) ou l'intensité du couple exercé par le système sur les roues (3) du chariot (1), ladite App (27) étant également conçue pour coopérer opérationnellement avec ledit tableau de commande (25) via Bluetooth (4).

4. Chariot motorisé (1) selon l'une quelconque des revendications précédentes, **caractérisé par le fait que** lesdits au moins deux moteurs (13) sont positionnés à l'intérieur desdites au moins deux roues (3), lesdits deux moteurs (13) étant également conçus pour être contrôlé par lesdits au moins deux pilotes (23) pouvant assurer un contrôle du couple.

5. Chariot motorisé (1) selon la revendication 1, **caractérisé en ce que** ladite batterie (9) est rechargée au moyen d'un chargeur de batterie (2).
